# EUROPEAN PATENT SPECIFICATION

(11) **EP 1 472 191 B1**
(45) Date of publication and mention of the grant of the patent: **13.09.2006**
(21) Application number: 03703865.0
(22) Date of filing: 16.01.2003
(51) Int. Cl.: C03B 37/083

(54) **FIBER-FORMING BUSHING WITH SUPPORT**
FASERDÜSE MIT TRÄGER
FILIERE POUR VERRANNE POUR FORMER DES FIBRES AVEC SUPPORT

(30) Priority: 04.02.2002 US 66892
(43) Date of publication of application: 03.11.2004
(73) Proprietor: OWENS CORNING, Toledo, Ohio 43659 (US)
(72) Inventor: SULLIVAN, Timothy, A., Newark, OH 43055 (US); BEMIS, Byron, L., Newark, OH 43056 (US); KECK, James, D., Newark, OH 43055 (US); EMERSON, Jack, L., Newark, OH 43055 (US)
(74) Representative: Jacob, Reuben Ellis
(86) International application number: PCT/US2003/001458
(87) International publication number: WO 2003/066538

(56) References cited:
- EP-A- 0 399 352
- EP-A- 1 193 225
- DD-A- 285 588
- US-A- 3 334 981
- US-A- 5 312 470
- US-A1- 2003 000 259
- US-B1- 6 221 506

## Description

This invention relates in general to an apparatus for producing continuous materials, and in particular, to a bushing for producing glass fibers. Most particularly, the invention relates to a fiber bushing with a lateral support.

Apparatus for producing continuous materials are well known. A conventional apparatus comprises a melter, into which a batch of material is fed, or a remelt apparatus or foremelter, into which marbles or cullet is fed. The melter melts the material to form molten glass. In a direct melt operation, the molten glass exits from the melter through a throat into a main channel. The main channel feeds a plurality of cross channels. Each cross channel, in turn, feeds molten glass to a plurality of forehearths. Each forehearth feeds molten glass downward through a plurality of bushing blocks. Each bushing block feeds molten glass into a bushing supported by a frame, which is mounted beneath the bushing block. In a remelt operation, the molten glass is fed directly into each bushing. The molten glass exits from each bushing in the form of glass fibers. A typical bushing produces hundreds to thousands of glass fibers.

US-A-3 334 981 discloses a fiber-forming bushing with a tip plate and at least one external longitudinal support extending longitudinally along the tip plate, whereby one of these supports extends longitudinally across the center of the tip plate. These external longitudinal supports are hollow and connected to a supply of cooling fluid.

DD-A5-0 0285 588 relates to a fiber-forming bushing with a top plate and several external lateral supports, either supported by the frame of the bushing or by the manifolds between which the cooling fins for cooling the fibers extend.

However, there is no disclosure, neither in US-A-3 334 981 nor in DD-A5-0 0285 588, of a fiber-forming bushing comprising an external longitudinal support and an external hollow lateral support, said supports being positioned, in use, below a tip plate.

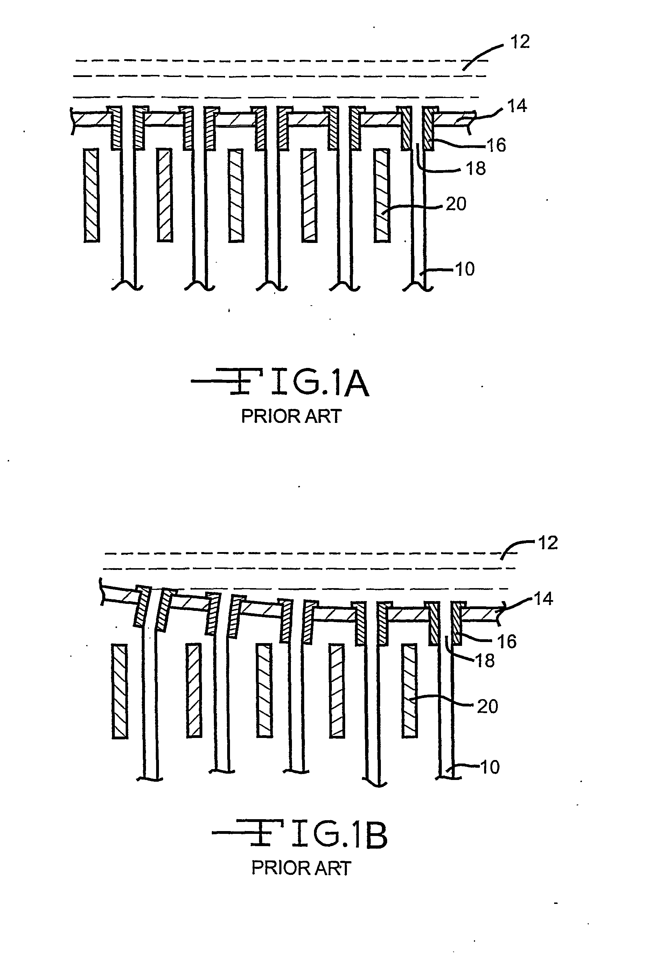

As shown in Fig. 1A, the glass fibers 10 are produced by passing the molten glass 12 through a tip plate 14. The tip plate 14 has a plurality of tips 16. Each tip 16 has an orifice 18 through which molten glass 12 passes. Glass exiting the tip 16 is in the form of a fiber 10. The fibers 10 are cooled by cooling fins 20 supported beneath the tip plate 14 and attenuated to a desired filament diameter with a rotating cylindrical winder or chopper.

As shown in Fig. 1B, heating a tip plate 14 decreases the structural properties of the tip plate material 14. Stresses resulting from the hydrostatic glass pressure, gravitational force, and forming tension result in high temperature creep of the alloy from which the tip plate is formed. This alloy creep causes deformation of the tip plate 14, causing it to sag downward. As the tip plate 14 sags, tips 16 assume different orientations. Consequently, some of the tips 16 are situated closer the cooling fins 20 than others. The cooling fins 20 must be lowered to the bottom of the lowest tips 16. Consequently, the cooling fins 20 are not equidistant from all the tips 16. Hence, some of the tips 16 are too close to the cooling fins 20 and therefore too cold and some of the tips 16 are too far from the cooling fins 20 and therefore too hot. If a tip 16 is too cold, the fiber 10 produced by the tip will decrease in diameter. This along a subsequent increase in forming tension may cause a breakout. The tips that are too hot have an increase in glass flow and a reduction in viscosity, which leads to flow instability that can also cause a breakout. A breakout is an interruption or separation of the fiber 10 formed from the tip 16. After the fiber breaks, a globule or bead forms on the tip 16.

When producing high temperature fiber products, such as the Advantex glass fiber product produced by Owens Coming, of Toledo, Ohio, U.S.A., the bushing must be heated to greater elevations, which further assaults the integrity of the tip plate 14, further reducing the life expectancy of the bushing.

At the end of the life of the bushing, the bushing is chopped up, refined and used to construct a new bushing. This process is labor intensive and results in some loss of precious resources.

What is needed is a support for a fiber bushing and a bushing construction that further resists tip plate deformation.

The present invention is directed toward a fiber-forming bushing comprising:
a tip plate comprising at least two tip sections and section spacing between the tip sections;
an external longitudinal support extending longitudinally across the center of the tip plate
an external hollow lateral support extending laterally along the section spacing and substantially perpendicular to and structurally independent of the longitudinal support wherein the lateral support has opposing ends and a nipple extending from each of the opposing ends so that the nipples are in fluid communication with the lateral support, wherein the said supports are positioned below (in use) the tip plate.

According to a further aspect of the invention there is provided a fiber-forming bushing comprising:
a bushing body;
a throat provided at an upper end of the bushing body;
an elongate tip plate provided at a lower end of the bushing body, the tip plate comprising at least two tip sections and section spacing between the tip sections;
an external support comprising an elongate center support extending between a pair of laterally extending end supports, the center support extending longitudinally along the tip plate, the end supports extending laterally along opposing ends of the tip plate; and
an external lateral support structurally independent of the center support and extending laterally along the section spacing and between the end supports, wherein the said supports are positioned below (in use) the tip plate.

Various objects and advantages of this invention will become apparent to those skilled in the art from the following detailed description of the preferred embodiment, when read in light of the accompanying drawings.
Fig. 1A is an enlarged partial side elevational view of a prior art fiber bushing with a non-deformed tip plate and cooling fins below the tip plate.
Fig. 1 B is an enlarged partial side elevational view of the prior art fiber bushing with a deformed tip plate and cooling fins below the tip plate.
Fig. 2 is a top perspective view of a bushing according to a preferred embodiment of the invention.
Fig. 3 is an environmental bottom perspective view of a bushing with lateral supports extending along the section spacing of the tip plates according to a preferred embodiment of the invention.
Fig. 4 is an enlarged bottom plan view of the bushing shown in Fig. 3.
Fig. 5 is an enlarged sectional view of the bushing taken along line 5-5 in Fig. 4.
Fig. 6 is an enlarged sectional view of the lateral support shown in Fig. 5.

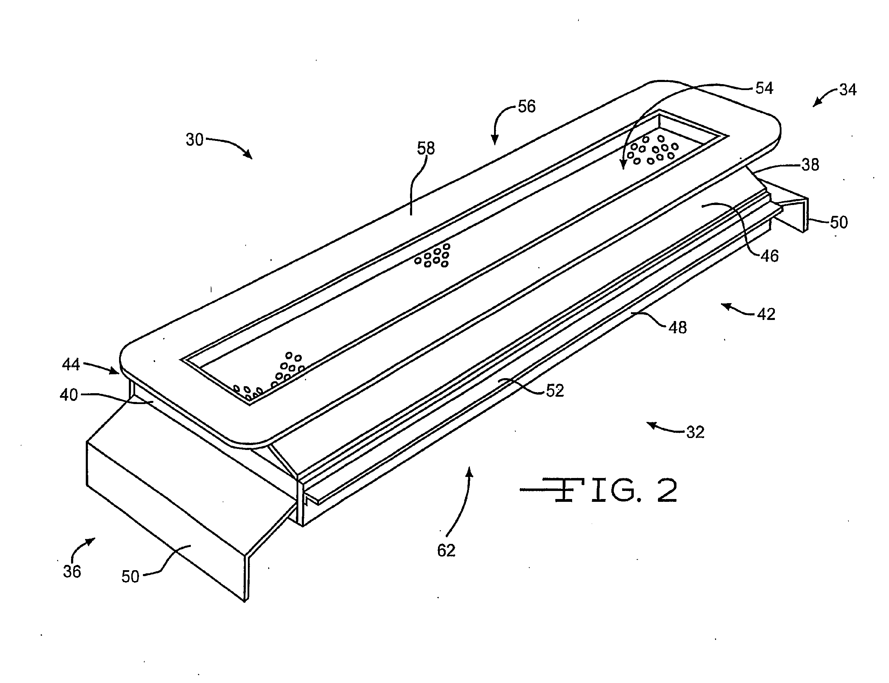

Referring now to the drawings, there is illustrated in Fig. 2 a bushing 30 comprising a bushing body 32 having opposing ends 34, 36. The bushing body 32 is constructed of a pair of longitudinally spaced end plates 38, 40 and a pair of laterally spaced side walls 42, 44, triangulated to form a substantially rectangular structure. Each side wall 42, 44 includes a upper side wall 46 and a lower side wall, or tip side plate 48. An ear 50 extends laterally from each end plate 38, 40. A side rail support bar 52 extends longitudinally along each tip side plate 48.

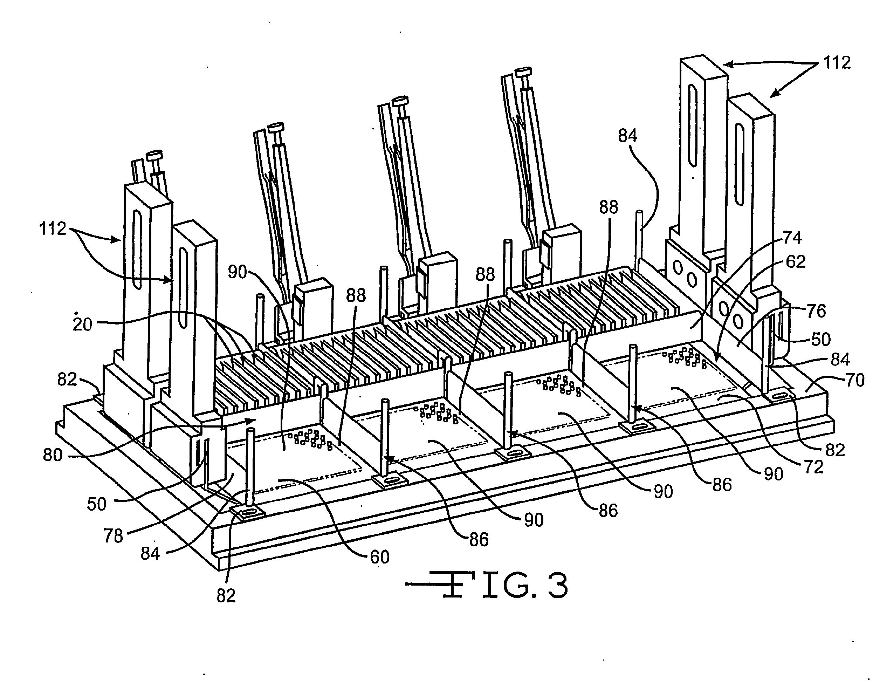

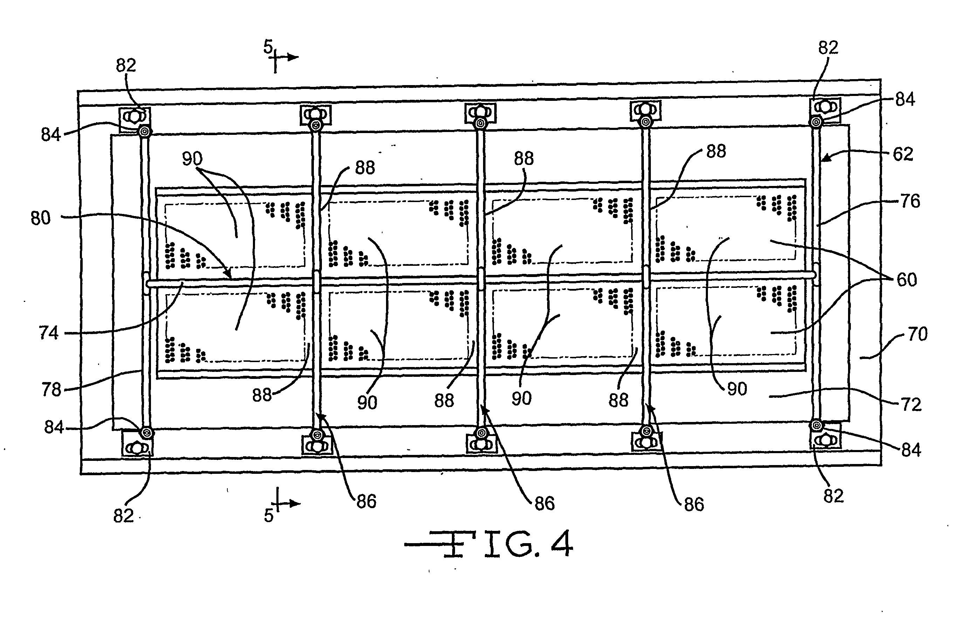

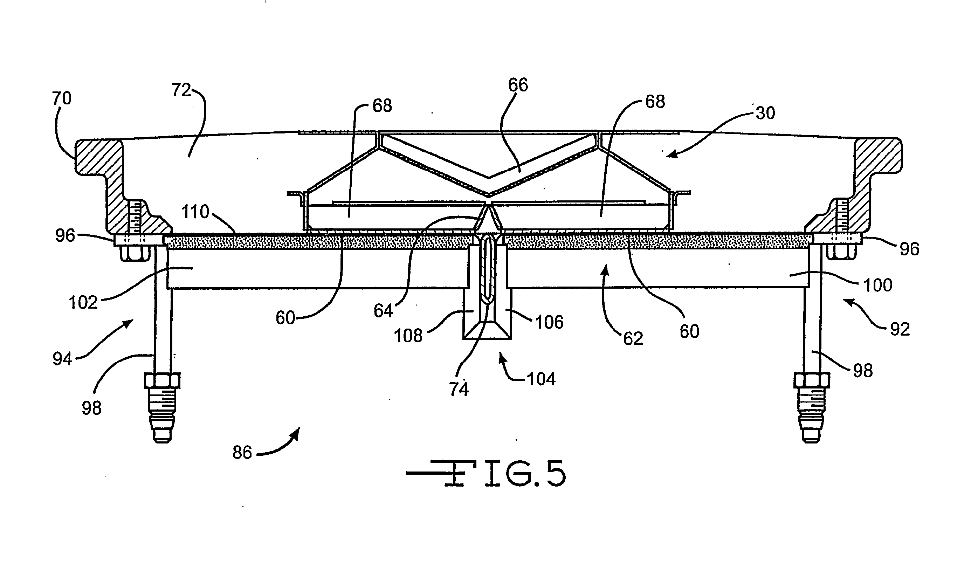

A throat 54 is provided at an upper end 56 of the bushing 30. A flange 58 is provided at an upper end of the throat 54. As shown in Figs. 3-5, an elongate tip plate 60 is provided at a lower end 62 of the bushing 30. In a preferred embodiment of the invention, a pair of laterally spaced tip plates 60 is provided. An elongate (inverted) center-V 64 extends between the laterally spaced tip plates 60. As shown in Fig. 5, a screen 66 is provided within an upper region of the bushing 30. A plurality of elongate gussets 68 is provided within a lower region of the bushing 30. More particularly, the gussets 68 are spaced discrete longitudinal distances apart and tacked to an upper surface of the tip plate 60.

As shown in Figs. 3-5, the bushing 30 is suspended within a frame 70. Refractory material 72 is poured around the bushing 30, between the frame 70 and the bushing 30. Refractory material 72 is also poured into the center-V 64. The refractory material 72 is permitted to harden.

An elongate center support 74 may extend longitudinally along the center-V 64, adjacent the refractory material 72 therein. In a preferred embodiment of the invention, the center support 74 extends between, and is connected to, a pair of laterally extending end supports 76, 78 to form a generally H-shaped support, generally indicated at 80. Mounting pads 82 extending from the end supports 76, 78 are secured to the frame 70 to hold the support 80 in a fixed position relative to the bushing 30. The center support 74 and the end supports 76, 78 are hollow and in fluid communication with each other. A nipple 84 extending from each end of each end support 76, 78 is in fluid communication with the end supports 76, 78. The term "nipple" used throughout this description is intended to be broadly interpreted to encompass any junction for the connection of fluid conduit.

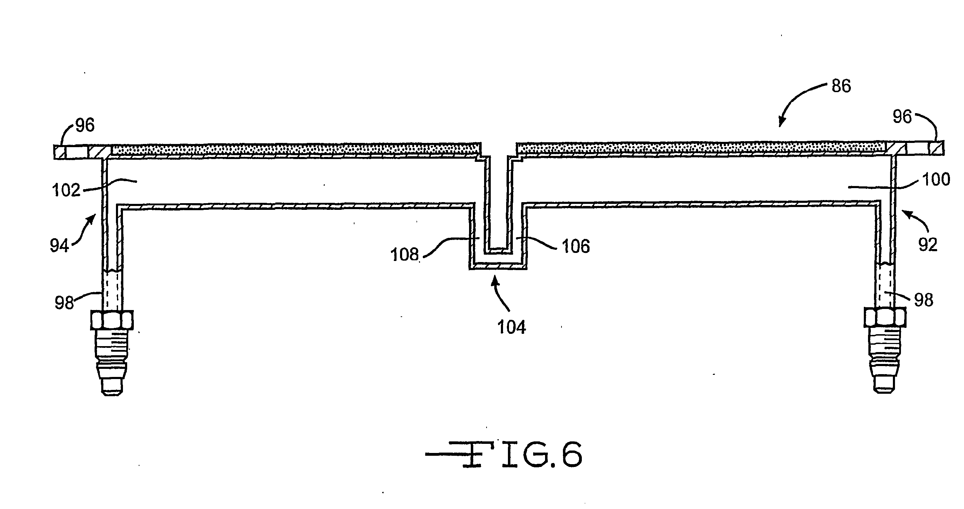

A lateral support 86 extends laterally along the section spacing 88 between the tip sections 90 of the tip plates 60. As shown in Figs. 5 and 6, the lateral support 86 is an elongate support having opposing ends 92, 94. Mounting pads 96 extending from the ends 92, 94 are secured to the frame 70 (as clearly shown in Fig. 5) to hold the lateral support 86 in a fixed position relative to the bushing 30. A nipple 98 extends from each end 92, 94 of the lateral support 86. As shown in Fig. 6, the lateral support 86 is hollow and in fluid communication with the nipples 98.

The center and lateral supports 74 and 86 traverse one another. In a preferred embodiment of the invention, the lateral support 86 is comprised of two hollow members 100, 102 having a fluid conduit 104 extending therebetween. The conduit 104 is preferably a generally U-shaped conduit having two legs 106, 108, each of which is connected to a corresponding hollow member 100, 102 so that the conduit 104 is in fluid communication with the hollow members 100, 102. The U-shaped conduit 104 extends downward and crosses over the center support 74.

The supports 80, 86 are preferably thermally and electrically insulated from the tip plate 60, as shown in Fig. 5. In a preferred embodiment of the invention, the top of each support 80, 86 is sprayed with a ceramic material 110. In the most preferred embodiment of the invention, an eighth inch layer of zirconium oxide is applied to the bottom of the lateral support 86.

In operation, a terminal clamp, generally indicated at 112, is connected to each ear 50. Each terminal clamp 112 is connected to a flexible bus bar (not shown). Each flexible bus bar is connected to a transformer pad via a tubular bus bar (not shown). The clamps 112, the tubular bus bars and the pads are hollow and water cooled. Supply and discharge lines (not shown) are connected to the nipples 84, 98. In a preferred embodiment of the invention, high-pressure hoses are connected to the nipples 84, 98 with compression fittings. A cooling fluid is passed through each of the clamps 112, bus bars, and supports 80, 86.

The bushing 30 is resistance heated by passing a high current (for example, 2,000 to 10,000 amps) through the ears 50 and bushing body 32. The bushing 30 is gradually heated until it reaches an operating temperature that can range from 2,100 to 2,800 degrees Fahrenheit, depending on the glass composition that is being formed. The heated bushing 30 is intended to condition the state of the molten glass, rather than melt the glass. The resistance heat is retained in the bushing body 32 by the hardened refractory material 72 formed about the bushing body 32.

Molten glass 12 (shown in Fig. 1) is introduced into the bushing 30 through its throat 54. The flange 58 forms a seal between the bushing block (not shown) and the throat 54. A coolant conduit (not shown) is provided about the periphery of the flange 58 to cool any molten glass 12 that may exit between the bushing block and the flange 58. This cooled glass blocks other molten glass 12 from exiting between the bushing block and the flange 58.

The molten glass 12 passes through the screen 66 as it passes through the bushing body 32. The screen 66 functions to capture solid matter suspended in the molten glass and assist in distributing the resistance heat uniformly throughout the molten glass 12.

As stated above, the tip plate 60 is provided with a plurality of tip sections 90, each separated by dead space, or section spacing 88. A plurality of tips 16 (best shown in Fig. 1) occupies each tip section 90. No tips 16 occupy the section spacing 88. Each tip 16 has an orifice 18 (shown in Fig. 1) through which molten glass 12 passes. Glass fibers 10 are formed from molten glass 12 exiting the tips 16, passing the fibers 10 between cooling fins 20 (shown in Figs. 1 and 3) beneath the tip plates 60. The cooling fins 20 cool the tips 16 and consequently the glass fibers 10 exiting the tips 16.

In a preferred embodiment of the invention, the tip plate 60 has an easily divisible number of tips 16. For example, the tip plate 60 may have 4,000 tips 16, and may be separated into four sections 90, each having 1,000 tips 16. Consequently, the bushing 30 may produce 4,000 fibers 10. The fibers 10 may be gathered into one or more strands, which are used to produce packages. The fibers 10 can be gathered in discrete amounts (for example, 1,000, 2,000, 3,000 or 4,000) to produce various strands for various packages.

The center-V 64 provides external resistance to deformation of the tip plates 60. Filling the center-V 64 with refractory material insulates the center support from the tip plates 60. The gussets 68 support the tip plates 60 internally from above, also resisting deformation of the tip plates 60. To further resist deformation, the supports 80, 86 provide subjacent external support for the tip plates 60. The center support 74 provides longitudinal support for the tip plate 60 along the center-V 64. The end supports 76, 78 support the center support. The lateral support 86 provides lateral support for the tip plate 60 along the section spacing 88 between the tip sections 90. Resisting tip plate deformation prolongs the life of the bushing 30.

## Claims

1. A fiber-forming bushing (30) comprising:
a tip plate (60) comprising at least two tip sections (90) and section spacing (88) between the tip sections;
an external longitudinal support (74) extending longitudinally across the center (64) of the tip plate (60)
an external hollow lateral support (86) extending laterally along the section spacing and substantially perpendicular to and structurally independent of the longitudinal support (74) wherein the lateral support has opposing ends (92, 94) and a nipple (98) extending from each of the opposing ends so that the nipples are in fluid communication with the lateral support, wherein the said supports are positioned below (in use) the tip plate.

2. A fiber-forming bushing (30) comprising:
a bushing body (32);
a throat (54) provided at an upper end (56) of the bushing body;
an elongate tip plate (60) provided at a lower end (62) of the bushing body, the tip plate comprising at least two tip sections (90) and section spacing (88) between the tip sections;
an external support comprising an elongate center support (74) extending between a pair of laterally extending end supports (76, 78), the center support extending longitudinally along the tip plate, the end supports extending laterally along opposing ends of the tip plate; and
an external lateral support (86) structurally independent of the center support and extending laterally along the section spacing and between the end supports, wherein the said supports are positioned below (in use) the tip plate.

3. The bushing according to claim 1 or claim 2, wherein the lateral support (86) is thermally and electrically insulated from the tip plate (60).

4. The bushing according to any of claims 1 to 3, wherein the lateral support (86) is coated with a ceramic material.

5. The bushing according to any of claims 1 to 4, wherein a layer of zirconium oxide is applied to the lateral support (86).

6. The bushing according to any of claims 1, 3, 4 or 5, wherein the lateral supports (86) is comprised of two hollow members (100, 102) having a fluid conduit (104) extending across the longitudinal support (74) and between the hollow members.

7. The bushing according to claim 6, wherein the conducts (104) is a generally U-shaped conduit having two legs (106, 108), each of the legs being connected to a corresponding one of the hollow members (100,102) so that the conduit is in fluid communication with the hollow members, the U-shaped conduit extending downward and across the longitudinal support (74).

8. The bushing according to claim 2, wherein the supports are hollow and the longitudinal center support (74) is in fluid communication with the end supports.

9. The bushing according to claim 8, wherein the end supports (76, 78) and opposing ends (92, 94) of the lateral support (86) have a nipple (84, 98) extending therefrom so that the nipples are in fluid communication with the end supports (76, 78) and the lateral support.

10. The bushing according to claim 8, wherein the longitudinal center support (74) and the lateral support (86) traverse one another.

11. The bushing according to claim 2, wherein the lateral support (86) comprised of two hollow members (100, 102) having a fluid conduit (104) extending across the longitudinal center support (74) and between the hollow members.

12. The bushing according to claim 11, wherein the conduit is a generally U-shaped conduit having two legs (106, 108), each of the legs being connected to a corresponding one of the hollow members (100, 102) so that the conduit is in fluid communication with the hollow members, the U-shaped conduit extending downward and across the longitudinal center support (74).

## Patentansprüche

1. Faserbildungsbuchse (30), umfassend:
eine Spitzenplatte (60), welche wenigstens zwei Spitzenabschnitte (90) und eine Abschnittsteilung (88) zwischen den Spitzenabschnitten umfasst;
einen äußeren Längsträger (74), der sich der Länge nach über die Mitte (64) der Spitzenplatte (60) erstreckt,
einen äußeren hohlen Querträger (86), der sich seitlich entlang der Abschnittsteilung und im Wesentlichen senkrecht zum und strukturell unabhängig vom Längsträger (74) erstreckt, wobei der Querträger gegenüberliegende Enden (92, 94) und einen Stutzen (98) aufweist, der sich von jedem der gegenüberliegenden Enden erstreckt, derart dass die Stutzen in Fluidverbindung mit dem Querträger sind, wobei die Träger (im Einsatz) unter der Spitzenplatte positioniert sind.

2. Faserbildungsbuchse (30), umfassend:
einen Buchsenkörper (32);
eine Öffnung (54), die an einem oberen Ende (56) des Buchsenkörpers vorgesehen ist;
eine längliche Spitzenplatte (60), die an einem unteren Ende (62) des Buchsenkörpers vorgesehen ist, wobei die Spitzenplatte wenigstens zwei Spitzenabschnitte (90) und eine Abschnittsteilung (88) zwischen den Spitzenabschnitten umfasst;
einen äußeren Träger, der einen länglichen Mittelträger (74) umfasst, der sich zwischen einem Paar von sich seitlich erstreckenden Endträgern (76, 78) erstreckt, wobei der Mittelträger sich der Länge nach entlang der Spitzenplatte erstreckt und die Endträger sich seitlich entlang gegenüberliegender Enden der Spitzenplatte erstrecken; und
einen äußeren Querträger (86), der strukturell unabhängig vom Mittelträger ist und sich seitlich entlang der Abschnittsteilung und zwischen den Endträgern erstreckt, wobei die Träger (im Einsatz) unter der Spitzenplatte positioniert sind.

3. Buchse nach Anspruch 1 oder 2, wobei der Querträger (86) thermisch und elektrisch von der Spitzenplatte (60) isoliert ist.

4. Buchse nach einem der Ansprüche 1 bis 3, wobei der Querträger (86) mit einem keramischen Material beschichtet ist.

5. Buchse nach einem der Ansprüche 1 bis 4, wobei eine Schicht aus Zirkoniumdioxid auf den Querträger (86) aufgetragen ist.

6. Buchse nach einem der Ansprüche 1, 3, 4, oder 5, wobei der Querträger (86) aus zwei hohlen Elementen (100, 102) mit einem Fluidkanal (104), der sich über den Längsträger (74) und zwischen den hohlen Elementen erstreckt, besteht.

7. Buchse nach Anspruch 6, wobei der Kanal (104) ein im Allgemeinen U-förmiger Kanal mit zwei Schenkeln (106, 108) ist, jeder der Schenkel mit einem entsprechenden der hohlen Elemente (100, 102) verbunden ist, derart dass der Kanal in Fluidverbindung mit den hohlen Elementen ist, und der U-förmige Kanal sich nach unten und über den Längsträger (74) erstreckt.

8. Buchse nach Anspruch 2, wobei die Träger hohl sind und der Längsmittelträger (74) in Fluidverbindung mit den Endträgern ist.

9. Buchse nach Anspruch 8, wobei die Endträger (76, 78) und gegenüberliegende Enden (92, 94) des Querträgers (86) einen Stutzen (84, 98) aufweisen, der sich so davon erstreckt, dass die Stutzen in Fluidverbindung mit den Endträgern (76, 78) und dem Querträger sind.

10. Buchse nach Anspruch 8, wobei der Längsmittelträger (74) und der Querträger (86) einander durchkreuzen.

11. Buchse nach Anspruch 2, wobei der Querträger (86) aus zwei hohlen Elementen (100, 102) mit einem Fluidkanal (104), der sich über den Längsmittelträger (74) und zwischen den hohlen Elementen erstreckt, besteht.

12. Buchse nach Anspruch 11, wobei der Kanal ein im Allgemeinen U-förmiger Kanal mit zwei Schenkeln (106, 108) ist, jeder der Schenkel mit einem entsprechenden der hohlen Elemente (100, 102) verbunden ist, derart dass der Kanal in Fluidverbindung mit den hohlen Elementen ist, und der U-förmige Kanal sich nach unten und über den Längsträger (74) erstreckt.

## Revendications

1. Filière de fibrage (30) comprenant:
un fond de filière (60) comprenant au moins deux parties de fond de filière (90) et une zone d'espacement de parties (88) située entre les parties de fond;
un support longitudinal extérieur (74) qui s'étend longitudinalement d'un bout à l'autre de la partie centrale (64) du fond de filière (60);
un support latéral creux extérieur (86) qui s'étend latéralement le long de la zone d'espacement et qui est sensiblement perpendiculaire au support longitudinal (74) et structuralement indépendant de celui-ci, le support latéral comportant des extrémités opposées (92, 94) et un manchon (98) qui s'étend à partir de chacune des extrémités opposées afin d'être en communication fluidique avec le support latéral, lesdits supports étant (en service) positionnés au-dessous du fond de filière.

2. Filière de fibrage (30) comprenant:
un corps de filière (32);
une ouverture (54) disposée au niveau d'une extrémité supérieure (56) du corps de filière;
un fond de filière allongé (60) disposé au niveau d'une extrémité inférieure (62) du corps de filière, le fond de filière comprenant au moins deux parties de fond de filière (90) et une zone d'espacement de parties (88) située entre les parties de fond;
un support extérieur comprenant un support central allongé (74) qui s'étend entre deux supports d'extrémité s'étendant latéralement (76, 78), le support central s'étendant longitudinalement le long du fond de filière et les supports d'extrémité s'étendant latéralement le long d'extrémités opposées du fond de filière; et
un support latéral extérieur (86) structuralement indépendant du support central et s'étendant latéralement le long de la zone d'espacement et entre les supports d'extrémité, lesdits supports étant (en service) positionnés au-dessous du fond de filière.

3. Filière selon la revendication 1 ou la revendication 2, dans laquelle le support latéral (86) est isolé thermiquement et électriquement du fond de filière (60).

4. Filière selon l'une quelconque des revendications 1 à 3, dans laquelle le support latéral (86) est revêtu d'une matière céramique.

5. Filière selon l'une quelconque des revendications 1 à 4, dans laquelle une couche d'oxyde de zirconium est appliquée au support latéral (86).

6. Filière selon l'une quelconque des revendications 1, 3, 4 et 5, dans laquelle le support latéral (86) est constitué de deux éléments creux (100, 102) comportant un conduit pour fluide (104) qui s'étend d'un bout à l'autre du support longitudinal (74) et entre les éléments creux.

7. Filière selon la revendication 6, dans laquelle le conduit (104) est un conduit de manière générale en forme de U comportant deux branches (106, 108) dont chacune est reliée à un élément correspondant des éléments creux (100, 102), afin que le conduit soit en communication fluidique avec les éléments creux, le conduit en forme de U s'étendant vers le bas et d'un bout à l'autre du support longitudinal (74).

8. Filière selon la revendication 2, dans laquelle les supports sont creux et le support central longitudinal (74) est en communication fluidique avec les supports d'extrémité.

9. Filière selon la revendication 8, dans laquelle les supports d'extrémité (76, 78) et les extrémités opposées (92, 94) du support latéral (86) comportent un manchon (84, 98) qui s'étend à partir d'eux afin d'être en communication fluidique avec les supports d'extrémité (76, 78) et le support latéral.

10. Filière selon la revendication 8, dans laquelle le support central longitudinal (74) et le support latéral (86) s'entrecroisent.

11. Filière selon la revendication 2, dans laquelle le support latéral (86) est constitué de deux éléments creux (100, 102) comportant un conduit pour fluide (104) qui s'étend d'un bout à l'autre du support central longitudinal (74) et entre les éléments creux.

12. Filière selon la revendication 11, dans laquelle le conduit est un conduit de manière générale en forme de U comportant deux branches (106, 108) dont chacune est reliée à un élément correspondant des éléments creux (100, 102), afin que le conduit soit en communication fluidique avec les éléments creux, le conduit en forme de U s'étendant vers le bas et d'un bout à l'autre du support longitudinal (74).
